# EUROPÄISCHE PATENTANMELDUNG

(11) **EP 4 667 807 A1**
(43) Veröffentlichungstag der Anmeldung: **24.12.2025**
(21) Anmeldenummer: 24183148.6
(22) Anmeldetag: 19.06.2024
(51) Int. Cl.: F16M 11/14, F16M 11/20, F16M 13/02, F16M 11/22

(54) **TRÄGER, BEVORZUGT MONITORTRÄGER, MIT SCHWERPUNKTVERSTELLUNG PER LANGLOCH**

(71) Anmelder: MAVIG GmbH, 81829 München (DE)
(72) Erfinder: THOMANN, Hendrik, 91056 Erlangen-Dechsendorf (DE); HOFFSTETTER, Marc, 80634 München (DE)
(74) Vertreter: Vossius & Partner Patentanwälte Rechtsanwälte mbB

(57) **Zusammenfassung**

Träger (10), der zum Tragen eines Apparates geeignet ist, der Träger (10) umfassend: eine Befestigungseinrichtung (12) mit zwei Schrauben (20); einen Geräteträger (14), der in einer ersten Richtung (30) relativ zu der Befestigungseinrichtung (12) positioniert ist, wobei an dem Geräteträger (14) der Apparat zumindest mittelbar befestigbar ist, wobei der Geräteträger (14) zwei Langlöcher (24) in einer Ebene umfasst, wobei sich die Ebene rechtwinklig zu der ersten Richtung (30) ausdehnt, und wobei die zwei Langlöcher (24) in einer gleichen Richtung ausgerichtet sind; zumindest ein Gegenstück (26), wobei die zwei Schrauben (20) eingerichtet sind durch die zwei Langlöcher (24) die Befestigungseinrichtung (12) mit dem zumindest einen Gegenstück (26) zu verbinden.

## Beschreibung

Die Offenbarung betrifft einen Träger und ein Verfahren zum Herstellen eines Trägers.

Zum Tragen von, beispielsweise, medizinischen Apparaten werden in Krankenhäusern, Arztpraxen und ähnlichen Einrichtungen Tragarmsysteme verwendet, die über einen Befestigungsanker an der Decke oder Wand des jeweiligen Behandlungsraums bzw. Operationssaals aufgehängt sind. Dadurch ist gewährleistet, dass der Boden des Behandlungsraumes bzw. Operationssaals stets frei zugänglich und insbesondere einfach zu reinigen und zu desinfizieren ist, so dass die gestellten Hygieneanforderungen erfüllt werden können. Apparate, wie Monitore, sind dabei häufig unten an einem Tragarm (mittels einer Aufhängung) befestigt. Der Apparat kippt dann so, dass sich dessen Schwerpunkt lotrecht unter (einem Drehpunkt) der Aufhängung befindet. Um einen Winkel des Apparates zu verändern, ist es somit erforderlich, den Aufhängungspunkt relativ zum Schwerpunkt des Apparates zu verändern.

Das Dokument DE 100 43 895 A1 offenbart einen Träger zum Tragen von zumindest einem Apparat, insbesondere zum Tragen von Bildschirmsichtgeräten und anderen medizinischen Geräten. Der Träger weist einen Tragarm, an dem der Apparat zumindest mittelbar befestigbar ist, und eine Befestigungseinrichtung auf, die zum Aufhängen des Trägers in einen Verbindungsabschnitt des Tragarms eingreift. Dabei ist die Eingriffstelle veränderbar, um den Schwerpunkt des beladenen Tragarms bei einer vorgegebenen Neigung des Tragarms zumindest näherungsweise unter den Aufhängepunkt zu verschieben an dem der Träger mittels der Befestigungseinrichtung aufgehängt ist.

Bekannte Träger sind aufwendig in der Konstruktion und Veränderung, sowie teuer. Auch brauchen bekannte Träger viel Platz.

Die zuvor genannten Nachteile werden zumindest teilweise durch Merkmale der unabhängigen Ansprüche vermieden. Abhängige Ansprüche weisen bevorzugte Ausführungsformen der Erfindung auf.

Im Einzelnen umfasst die vorliegende Offenbarung einen Träger zum Tragen eines Apparates, der Träger umfasst: eine Befestigungseinrichtung mit zwei Schrauben; einen Tragarm, der in einer ersten Richtung relativ zu der Befestigungseinrichtung positioniert ist, wobei an dem Tragarm der Apparat zumindest mittelbar befestigbar ist, wobei der Tragarm zwei Langlöcher in einer (ersten) Ebene umfasst, wobei sich die (erste) Ebene rechtwinklig zu der ersten Richtung ausdehnt, und wobei die zwei Langlöcher in einer gleichen Richtung ausgerichtet sind; zumindest ein Gegenstück, wobei die zwei Schrauben eingerichtet sind durch die zwei Langlöcher die Befestigungseinrichtung mit dem zumindest einen Gegenstück zu verbinden.

Die zwei (oder mehr) Schrauben der Befestigungseinrichtung können durch die Langlöcher (bevorzugt eine Schraube je Langloch) geführt werden und dann in dem Gegenstück eingeschraubt werden. Durch die längliche Aussparung der Langlöcher kann der Tragarm relativ zur Befestigungseinrichtung verschoben werden. Wenn eine gewünschte relative Position erreicht ist, können die Schrauben festgezogen werden und dadurch eine weitere Verschiebung unterbunden werden. Eine solche Einstellung der relativen Position ist leicht umsetzbar-während der erstmaligen Montage sowie beim Verstellen (beispielsweise, wenn der befestigte Apparat ausgetauscht wird). Auch ist ein solcher Träger günstig und platzsparend.

Die Befestigungseinrichtung kann indirekt mit einer Wand oder Decke verbunden sein (beispielsweise über eine kardanische Aufhängung, einem Tragarm, und/oder ähnlichem). Die Befestigungseinrichtung umfasst zwei Löcher, durch die die zwei Schrauben geführt werden können. Durch ein relatives Verschieben der Befestigungseinrichtung zum Geräteträger (durch die Schrauben in den Langlöchern) kann der Schwerpunkt des befestigten Apparats relativ zur Aufhängung verschoben werden. Dadurch kann ein Winkel des befestigten Apparats verändert werden. Die Schrauben verlaufen bevorzugt in der ersten Richtung.

Der Apparat kann ein Bildschirm/Monitor, Werkzeug, Tablett (Ablage), eine Lampe, anderes medizinisches Gerät oder Ähnliches sein.

Der Geräteträger hält den Apparat bevorzugt direkt und ist direkt am Apparat befestigt (wenn befestig). Im montierten Zustand entspricht die erste Richtung einer vertikalen Richtung nach unten (Lot). Die erste Ebene ist entsprechend waagerecht. Der Apparat kann mittels weiterer Befestigungselemente (Schrauben, Klemmen, etc.) an dem Geräteträger befestigt sein. Die Langlöcher können in den Geräteträger gefräst, geschnitten, beim Gießen freigelassen oder anders hergestellt sein. Die Langlöcher können sich an einem oberen Abschnitt (/oberen Ende) des Geräteträgers befinden (oben ist entgegengesetzt der ersten Richtung). Entsprechend kann die erste Ebene die oberste Ebene des Geräteträgers sein. Die Langlöcher können sich in der ersten Ebene erstrecken.

Das Gegenstück können zwei (beziehungsweise gleich der Anzahl der Schrauben der Befestigungseinrichtung) Schraubenmuttern, oder eine Platte mit zwei (oder entsprechender Anzahl) an Gewinden zum Aufnehmen der Schrauben oder Ähnliches sein. Alternativ kann das Gegenstück auch etwas anderes sein, das die vorderen Enden der Schrauben aufnimmt. Das Gegenstück kann die Schrauben so fixieren, dass die Schrauben die Befestigungseinrichtung mit dem Geräteträger verbinden. Wenn die Schrauben in dem Gegenstück festgezogen werden, kann der Geräteträger so an der Befestigungseinrichtung fixiert werden, dass keine Verschiebung mehr möglich ist. Das Gegenstück kann einteilig, zweiteilig oder mehrteilig sein.

Ferner kann die Befestigungseinrichtung eine kardanische Aufhängung umfassen.

Die kardanische Aufhängung kann ein Kugelgelenk oder eine andere Kardanik sein. Die kardanische Aufhängung befindet sich (im montierten Zustand) bevorzugt oberhalb des zu haltenden Apparates mit dem Geräteträger. Durch die kardanische Aufhängung kann der Schwerpunkt des zu haltenden Apparates (mit Geräteträger und anderen Teilen) senkrecht im Lot unter der kardanischen Aufhängung sein. In Kombination mit der (zuvor beschriebenen) Verschiebung mit Hilfe der Langlöcher kann die kardanische Aufhängung verschiedene Winkel des zu haltenden Apparates ermöglichen.

Ferner können die zwei Schrauben und das Gegenstück in der ersten Richtung relativ zu der kardanischen Aufhängung positioniert sein.

Dadurch, dass die Befestigung unterhalb (in erster Richtung) von der kardanischen Aufhängung positioniert ist, kann der Schwerpunkt des zu haltenden Apparates mit der Befestigung (kurz: was an der kardanischen Aufhängung dranhängt) stabiler den Winkel des zu haltenden Elementes halten. Der Schwerpunkt hängt tiefer und ist somit stabiler.

Ferner kann der Apparat an dem Geräteträger in der ersten Richtung (/unterhalb) relativ zu der Befestigungseinrichtung zumindest mittelbar befestigbar sein.

Auch dies kann der stabilen Winkeleinstellung behilflich sein.

Der (zu haltende) Apparat kann direkt oder mittelbar an dem Geräteträger befestigt sein. Eine direkte Befestigung kann mittels Schrauben, Klemmen, oder Ähnlichem erfolgen. Alternativ kann der Geräteträger eine Auflagefläche aufweisen, auf der der zu haltende Apparat stehen kann, möglicherweise ohne weitere Befestigungsmittel. Eine mittelbare Befestigung kann mittels eines weiteren Geräteträgers, und/oder weiterer Zwischenelemente erfolgen.

Ferner kann das zumindest eine Gegenstück zwei Schraubenmütter sein oder wobei das zumindest eine Gegenstück ein Gegenstück mit zwei Löchern sein.

Die zwei Löcher im Gegenstück können (jeweils) ein Gewinde aufweisen.

Ferner kann der Geräteträger relativ zu der Befestigungseinrichtung verschiebbar sein, um den Schwerpunkt des mit dem Apparat beladenen Geräteträgers bei einer vorgegebenen Neigung des Geräteträgers zumindest näherungsweise unter einen Aufhängepunkt zu verschieben, an dem der Träger mittels der Befestigungseinrichtung aufgehängt ist.

Die Verschiebung kann entlang der (zwei) Langlöcher erfolgen.

Ferner können die Langlöcher gerade sein.

Gerade Langlöcher ermöglichen eine Verschiebung in einer geraden Linie. Bevorzugt sind die verschiedenen Langlöcher gleich lang und erstrecken sich in gleicher Form in die gleiche Richtung. Bevorzugt ist ein Abstand (sind Abstände; Distanz zwischen gleichen Punkten der Langlöcher) zwischen den Langlöchern gleich wie ein Abstand (Abstände) zwischen Löchern in der Befestigungseinrichtung. Somit können die Schrauben in den entsprechenden Langlöchern die vollen Ausmaße der Langlöcher ausreizen bei der Verschiebung des Geräteträgers relativ zur Befestigungseinrichtung.

Alternativ können die Langlöcher gebogen sein und/oder Ecken aufweisen (bevorzugt alle Langlöchergleich geformt). Dadurch kann eine Verschiebung in andere Richtungen ermöglicht werden.

Bevorzugt erstrecken sich die Langlöcher nach vorne (und hinten), um eine Neigung nach vorne/hinten zu ermöglichen.

Ferner kann der Geräteträger bogenförmig, insbesondere C-bogenförmig, ausgebildet sein.

Dadurch kann der Geräteträger um die Apparate herumgeführt werden, so dass der für die Apparate vorgesehene Raum optimal genutzt werden kann. Außerdem ist dadurch der Verbindungsabschnitt des Geräteträgers auf einfache Weise, nämlich durch den oberen zumindest teilweise waagerecht verlaufenden Bogen des C-Bogens des Geräteträgers gegeben. Auch befindet sich so der Schwerpunkt des zu haltenden Apparates zentraler unter der Befestigungseinrichtung.

Ferner kann die Befestigungseinrichtung vier Schrauben umfassen und der Geräteträger vier Langlöcher (in der ersten Ebene) umfassen.

Jede Anzahl an Schrauben und Langlöchern, jeweils größer zwei ist möglich. Es können auch zwei (oder mehr) Schrauben durch (jeweils) ein (größeres) Langloch geführt werden. Bei drei oder mehr Langlöchern können diese in zwei Dimensionen auf der ersten Ebene verteilt sein (also nicht in Reihe nebeneinander). Dadurch kann eine Stabilität erhöht werden.

Ferner umfasst die vorliegende Offenbarung ein Verfahren zum Herstellen eines Trägers, das Verfahren umfassend: Bereitstellen einer Befestigungseinrichtung mit zwei Schrauben; bereitstellen eines Geräteträgers, der in einer ersten Richtung relativ zu der Befestigungseinrichtung positioniert ist, wobei an dem Geräteträger der Apparat zumindest mittelbar befestigbar ist, wobei der Geräteträger zwei Langlöcher in einer (ersten) Ebene umfasst, wobei sich die (erste) Ebene rechtwinklig zu der ersten Richtung ausdehnt, und wobei die zwei Langlöcher in einer gleichen Richtung ausgerichtet sind; Bereitstellen zumindest eines Gegenstücks, wobei die zwei Schrauben eingerichtet sind durch die zwei Langlöcher die Befestigungseinrichtung mit dem zumindest einen Gegenstück zu verbinden; und Verschrauben der zwei Schrauben in dem Gegenstück, wobei die Schrauben durch die Langlöcher verlaufen.

Die beschriebenen Vorteile sind weder limitierend noch exklusiv für die entsprechenden Aspekte. Ein Aspekt kann weitere, nicht explizit genannte Vorteile haben.

Die hier offengelegten beispielhaften Ausführungsformen und Beispiele sind darauf ausgerichtet, Merkmale bereitzustellen, die durch Bezugnahme auf die folgende Beschreibung in Verbindung mit den beigefügten Figuren leicht ersichtlich werden. In Übereinstimmung mit verschiedenen Ausführungsformen werden hier beispielhafte Systeme, Verfahren und Geräte offengelegt. Es versteht sich jedoch, dass diese Ausführungsformen als Beispiele und nicht als Beschränkungen dargestellt werden, und es wird für diejenigen, die die vorliegende Offenbarung gelesen haben und über normale Fachkenntnisse verfügen, offensichtlich sein, dass verschiedene Änderungen an den offengelegten Ausführungsformen vorgenommen werden können, während sie im Rahmen der vorliegenden Offenbarung bleiben.

Daher ist die vorliegende Offenbarung nicht auf die hierin beschriebenen und dargestellten beispielhaften Ausführungsformen und Anwendungen beschränkt. Darüber hinaus sind die spezifische Reihenfolge und/oder Hierarchie der Schritte in den hier offengelegten Verfahren lediglich beispielhafte Ansätze. Auf der Grundlage von Konstruktionsvorlieben kann die spezifische Reihenfolge oder Hierarchie der Schritte der offengelegten Verfahren oder Prozessen neu geordnet werden, während sie im Rahmen der vorliegenden Offenbarung bleibt. Diejenigen, die sich mit der Materie auskennen, werden daher verstehen, dass die hier offengelegten Verfahren und Techniken verschiedene Schritte oder Handlungen in einer Beispielreihenfolge darstellen, und die vorliegende Offenbarung nicht auf die spezifische Reihenfolge oder Hierarchie beschränkt ist, sofern nicht ausdrücklich etwas anderes angegeben ist.

Es versteht sich auch, dass jede Bezugnahme auf ein Element hier mit einer Bezeichnung wie "erstes", "zweites" usw. nicht generell die Menge oder Reihenfolge dieser Elemente begrenzt. Vielmehr können diese Bezeichnungen hier als praktisches Mittel zur Unterscheidung zwischen zwei oder mehr Elementen oder Instanzen eines Elements verwendet werden. Der Hinweis auf ein erstes und ein zweites Element bedeutet also nicht, dass nur zwei Elemente verwendet werden können oder dass das erste Element dem zweiten Element auf irgendeine Weise vorausgehen muss.

Verschiedene Modifikationen der in dieser Offenbarung beschriebenen Implementierungen sind für den Fachmann ohne weiteres ersichtlich, und die hierin definierten allgemeinen Grundsätze können auf andere Implementierungen angewandt werden, ohne vom Umfang dieser Offenbarung abzuweichen. Daher ist die Offenbarung nicht auf die hier gezeigten Implementierungen beschränkt, sondern hat den größtmöglichen Anwendungsbereich, der mit den hier offengelegten neuen Merkmalen und Grundsätzen vereinbar ist, wie sie in den untenstehenden Ansprüchen aufgeführt sind.

Die obigen und andere Aspekte und ihre Implementierungen werden in den Zeichnungen, den Beschreibungen und den Ansprüchen ausführlicher beschrieben.
Fig. 1 zeigt eine Abbildung eines Trägers einer Ausführungsform der vorliegenden Offenbarung.
Fig. 2 zeigt eine Abbildung eines Trägers einer Ausführungsform der vorliegenden Offenbarung.
Fig. 3 zeigt eine Abbildung eines Ausschnitts eines Trägers einer Ausführungsform der vorliegenden Offenbarung.
Figuren 4 zeigt eine Abbildung eines Trägers einer Ausführungsform der vorliegenden Offenbarung in einer Verschiebungspositionen.
Figuren 5 zeigt eine Abbildung des Trägers der Fig. 4 in einer zweiten Verschiebungspositionen gemäß einer Ausführungsform der vorliegenden Offenbarung.
Fig. 6 zeigt ein schematisches Ablaufdiagramm des Herstellungsverfahrens einer Ausführungsform der vorliegenden Offenbarung.

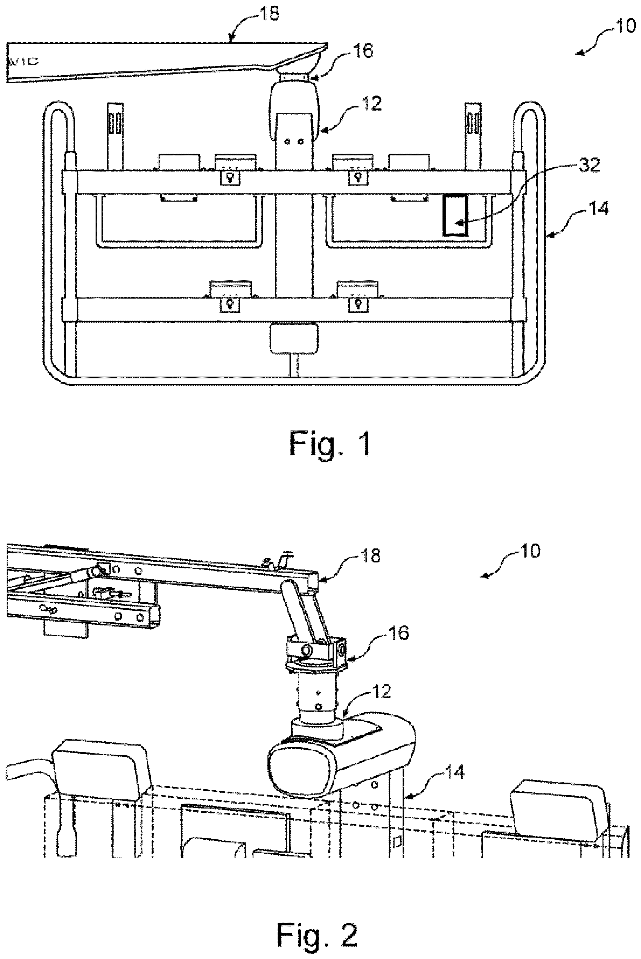

Fig. 1 zeigt eine Abbildung eines beispielhaften Trägers 10 gemäß einer Ausführungsform der vorliegenden Offenbarung. Der Träger 10 umfasst eine Befestigungseinrichtung 12, einen Geräteträger 14, eine kardanische Aufhängung 16, einen Tragarm 18 und ein verschiebbares Gewicht 32. Der Tragarm 18 kann an einer Wand oder Decke (mittels eines Befestigungsankers) fixiert sein. Der Geräteträger 14 ist mittels der Befestigungseinrichtung 12 an der kardanischen Aufhängung 16 befestigt. Die Befestigungseinrichtung 12 ist mittels der kardanische Aufhängung 16 mit dem Tragarm 18 verbunden. Das Gewicht 32 kann seitlich (in Fig. 1 nach links und rechts) verschoben werden. So kann der Geräteträger 14 durch Veränderung des Schwerpunkts seitlich über die kardanische Aufhängung 16 relativ zum Tragarm 18 verkippt werden. Die Verschiebung per Langlöcher 24 kann eine Verkippung nach vorne und hinten erzeugen (in Perspektive der Fig. 1) - je nach Ausdehnung der Langlöcher (bevorzugt ausgedehnt nach vorne und hinten - also aus der Bildebene heraus).

Fig. 2 zeigt eine Abbildung eines beispielhaften Trägers 10 gemäß einer Ausführungsform der vorliegenden Offenbarung. Der Träger 10 der Fig. 2 kann der gleiche Träger 10 wie in Fig. 1 sein. In dem Fall zeigt Fig. 2 einen Ausschnitt aus Fig. 1. Fig. 2 zeigt gleiche (oder ähnliche) Elemente wie Fig. 1. Um Wiederholungen zu vermeiden, sind gleiche Merkmale teilweise nicht wiederholt. Es wird auf die zuvorstehende Offenbarung verwiesen. Dies gilt auch für die nachfolgenden Figuren.

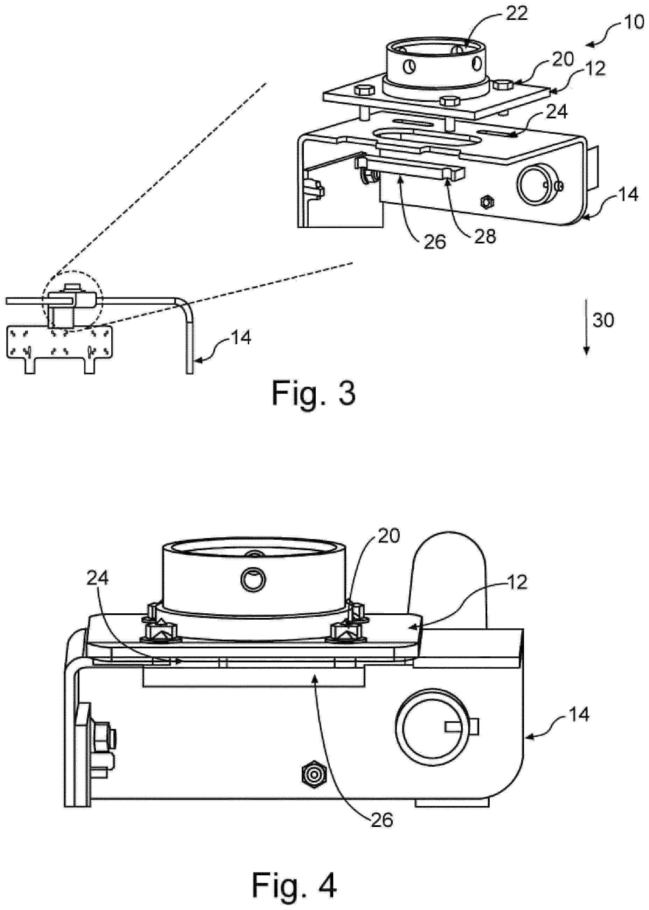

Fig. 3 zeigt eine Abbildung eines Ausschnitts eines beispielhaften Trägers 10 gemäß einer Ausführungsform der vorliegenden Offenbarung. Der Träger 10 aus Fig. 3 kann der gleiche Träger 10 wie in Fig. 1 und/oder Fig. 2 sein. Während der obere rechte Teil der Fig. 3 den Ausschnitt zeigt, zeigt der untere linke Teil welcher Ausschnitt des Trägers 10 gezeigt wird.

Der Träger 10 umfasst eine Befestigungseinrichtung 12 mit vier Schrauben 20 und einen Ansatz 22 für eine kardanische Aufhängung 16, einen Geräteträger 14 mit Langlöchern 24, und ein Gegenstück 26 mit Löchern 28.

Die Befestigungseinrichtung 12 hat oben (entgegen der ersten Richtung 30) einen Ansatz 22 für die kardanische Aufhängung 16. Die kardanische Aufhängung 16 kann direkt den Ansatz 22 umfassen (beispielsweise als Kugelgelenk). Alternativ kann die kardanische Aufhängung 16 mit dem Ansatz 22 verbunden sein. Ferner umfasst die Befestigungseinrichtung 12 (in diesem Fall vier) Löcher durch die die (in diesem Fall vier) Schrauben 20 verlaufen.

Der Geräteträger 14 umfasst (in diesem Fall vier) Langlöcher 24. Die Langlöcher 24 liegen in der gleichen (ersten) Ebene. Die Langlöcher 24 haben die gleiche Ausrichtung und Maße. Ferner haben die Langlöcher 24 die gleichen Abstände zueinander wie die Löcher in der Befestigungseinrichtung 12. Dadurch können die Schrauben 20 (die bereits durch die Löcher in der Befestigungseinrichtung 12 verlaufen) auch durch die Langlöcher 24 verlaufen und sich im jeweiligen Langloch 24 entlang der gesamten Maße bewegen (auch wenn alle Schrauben eingefädelt sind). Die Langlöcher 24 sind gerade.

Das Gegenstück 26 umfasst Löcher 28. Die Löcher 28 haben Windungen in die Schrauben 20 eingeschraubt werden können. In Fig. 3 ist nur ein Gegenstück 26 gezeigt, nämlich für (nur) zwei der Schrauben 20. Es kann ein weiteres Gegenstück 26 für die anderen beiden Schrauben 20 geben. Die Gegenstücke 26 sind auf der der Befestigungseinrichtung 12 abgewandten Seite der (ersten) Ebene des Geräteträgers 14 positioniert. Die Schrauben 20 können in den Löchern 28 der Gegenstücke verschraubt sein und (wenn die Schrauben 20 auch durch die Löcher der Befestigungseinrichtung 12 und die Langlöcher 24 verlaufen) den Geräteträger 14 mit der Befestigungseinrichtung 12 beweglich verbinden. Wenn die Schrauben 20 festgezogen werden, kann die Beweglichkeit unterbunden werden. Wenn die Befestigungseinrichtung 12 relativ zum Geräteträger 14 bewegt wird, bewegen sich die Gegenstücke 26 nicht relativ zur Befestigungseinrichtung 12. Die Gegenstücke 26 können auch einstückig ausgebildet sein, d.h. es kann lediglich ein Gegenstück 26 für alle Schrauben 20 vorgesehen sein.

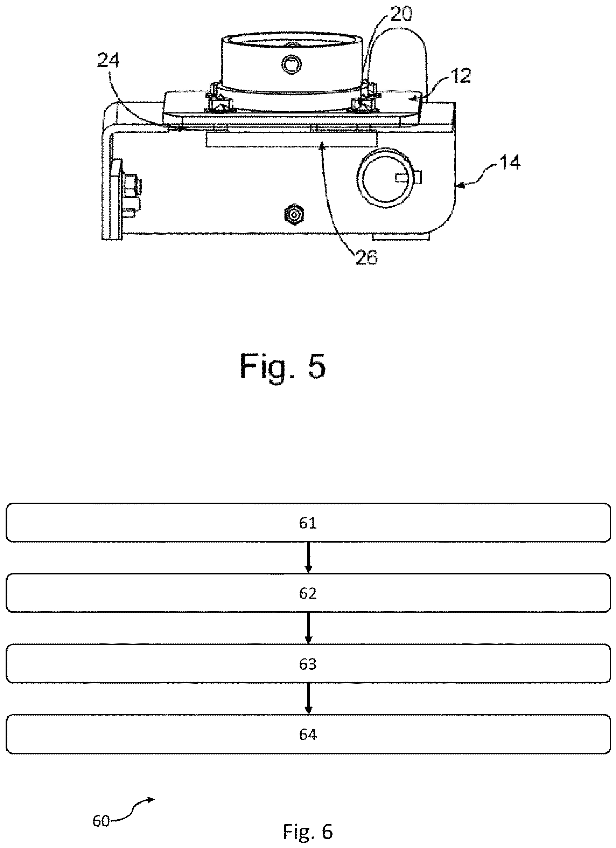

Figuren 4 und 5 zeigen Abbildungen eines beispielhaften Trägers 10 in verschiedenen Verschiebungspositionen gemäß einer Ausführungsform der vorliegenden Offenbarung. Der Träger 10 aus Figuren 4 und 5 kann der gleiche Träger 10 wie in einem oder mehreren der vorhergehenden Figuren sein.

In Fig. 4 ist die Befestigungseinrichtung 12 mit dem Gegenstück 26, relativ zu dem Geräteträger 14, ganz nach vorne (links in der Figur) verschoben. In Fig. 5 ist die Befestigungseinrichtung 12 mit dem Gegenstück 26, relativ zu dem Geräteträger 14, ganz nach hinten (rechts in der Figur) verschoben. In beiden Fällen schlagen die Schrauben 20 an einem Ende der Langlöcher 24 an. Somit sind Extrempositionen erreicht. Auch Zwischenpositionen sind möglich - also dass die Schrauben sich zwischen den Enden der entsprechenden Langlöcher 24 befinden.

Fig. 6 zeigt ein schematisches Ablaufdiagramm des Herstellungsverfahrens gemäß einer Ausführungsform der vorliegenden Offenbarung. Das Verfahren 60 umfasst Schritte 61 bis 64. In Schritt 61 wird eine Befestigungseinrichtung 12 mit zwei Schrauben 20 bereitgestellt. In Schritt 62 wird ein Geräteträger 14, der in einer ersten Richtung 30 (/unterhalb) relativ zu der Befestigungseinrichtung 12 positioniert ist bereitgestellt, wobei an dem Geräteträger 14 der Apparat zumindest mittelbar befestigbar ist, wobei der Geräteträger 14 zwei Langlöcher 24 in einer (ersten) Ebene umfasst, wobei sich die (erste) Ebene rechtwinklig zu der ersten Richtung 30 ausdehnt, und wobei die zwei Langlöcher 24 in einer gleichen Richtung ausgerichtet sind. In Schritt 63 wird zumindest ein Gegenstück 26 bereitgestellt, wobei die zwei Schrauben 20 eingerichtet sind durch die zwei Langlöcher 24 die Befestigungseinrichtung 12 mit dem zumindest einen Gegenstück 26 zu verbinden. In Schritt 64 werden die zwei Schrauben 20 in dem Gegenstück 26 verschraubt, wobei die Schrauben 20 durch die Langlöcher 24 verlaufen.

## Patentansprüche

1. Träger (10) zum Tragen eines Apparates, der Träger (10) umfassend:
eine Befestigungseinrichtung (12) mit zwei Schrauben (20);
einen Geräteträger (14), der in einer ersten Richtung (30) relativ zu der Befestigungseinrichtung (12) positioniert ist, wobei an dem Geräteträger (14) der Apparat zumindest mittelbar befestigbar ist, wobei der Geräteträger (14) zwei Langlöcher (24) in einer Ebene umfasst, wobei sich die Ebene rechtwinklig zu der ersten Richtung (30) ausdehnt, und wobei die zwei Langlöcher (24) in einer gleichen Richtung ausgerichtet sind;
zumindest ein Gegenstück (26), wobei die zwei Schrauben (20) eingerichtet sind durch die zwei Langlöcher (24) die Befestigungseinrichtung (12) mit dem zumindest einen Gegenstück (26) zu verbinden.

2. Träger (10) nach Anspruch 1, wobei die Befestigungseinrichtung (12) eine kardanische Aufhängung (16) umfasst.

3. Träger (10) nach Anspruch 1, wobei die zwei Schrauben (20) und das Gegenstück (26) in der ersten Richtung (30) relativ zu der kardanischen Aufhängung (16) positioniert sind.

4. Träger (10) nach Anspruch 1 oder 2, wobei der Apparat an dem Geräteträger (14) in der ersten Richtung (30) relativ zu der Befestigungseinrichtung (12) zumindest mittelbar befestigbar ist.

5. Träger (10) nach einem der Ansprüche 1 bis 4, wobei das zumindest eine Gegenstück (26) zwei Schraubenmütter sind oder wobei das zumindest eine Gegenstück (26) ein Gegenstück (26) mit zwei Löchern ist.

6. Träger (10) nach einem der Ansprüche 1 bis 5, wobei der Geräteträger (14) relativ zu der Befestigungseinrichtung (12) verschiebbar ist, um den Schwerpunkt des mit dem Apparat beladenen Geräteträger (14) bei einer vorgegebenen Neigung des Tragarms (14) zumindest näherungsweise unter einen Aufhängepunkt zu verschieben, an dem der Träger (10) mittels der Befestigungseinrichtung (12) aufgehängt ist.

7. Träger (10) nach einem der Ansprüche 1 bis 6, wobei die Langlöcher (24) gerade sind.

8. Träger (10) nach einem der Ansprüche 1 bis 7, wobei der Tragarm (14) bogenförmig, insbesondere C-bogenförmig, ausgebildet ist.

9. Träger (10) nach einem der Ansprüche 1 bis 8, wobei die Befestigungseinrichtung (12) vier Schrauben (20) umfasst und der Geräteträger (14) vier Langlöcher (24) umfasst.

10. Verfahren zum Herstellen eines Trägers (10), das Verfahren umfassend:
bereitstellen einer Befestigungseinrichtung (12) mit zwei Schrauben (20);
bereitstellen eines Geräteträgers (14), der in einer ersten Richtung (30) relativ zu der Befestigungseinrichtung (12) positioniert ist, wobei an dem Tragarm (14) der Apparat zumindest mittelbar befestigbar ist, wobei der Geräteträger (14) zwei Langlöcher (24) in einer Ebene umfasst, wobei sich die Ebene rechtwinklig zu der ersten Richtung (30) ausdehnt, und wobei die zwei Langlöcher (24) in einer gleichen Richtung ausgerichtet sind;
bereitstellen zumindest eines Gegenstücks (26), wobei die zwei Schrauben (20) eingerichtet sind durch die zwei Langlöcher (24) die Befestigungseinrichtung (12) mit dem zumindest einen Gegenstück (26) zu verbinden; und
verschrauben der zwei Schrauben (20) in dem Gegenstück (26), wobei die Schrauben (20) durch die Langlöcher (24) verlaufen.
